# EUROPEAN PATENT SPECIFICATION

(11) **EP 0 791 615 B1**
(45) Date of publication and mention of the grant of the patent: **03.05.2000**
(21) Application number: 97102795.8
(22) Date of filing: 20.02.1997
(51) Int. Cl.: C08G 67/02

(54) **Process for producing polyalcohols**
Verfahren zur Herstellung von Polyalkoholen
Procédé pour la préparation de polyalcools

(30) Priority: 20.02.1996 JP 3166996
(43) Date of publication of application: 27.08.1997
(73) Proprietor: KURARAY CO., LTD., Kurashiki-City (JP)
(72) Inventor: Suzuki, Shigeaki, Kurashiki-shi, Okayama-ken, 710 (JP); Yada, Kazuaki, Kurashiki-shi, Okayama-ken, 710 (JP)
(74) Representative: Müller-Boré & Partner Patentanwälte

(56) References cited:
- EP-A- 0 334 454
- JP-A- 1 149 828
- JP-A- 2 232 228
- JP-A- 5 339 367

## Description

The present invention relates to a process for hydrogenating polyketones which are copolymers of carbon monoxide and at least one olefin, to produce polyalcohols useful as gas-barrier materials such as packaging materials.

Several processes are known, which comprise hydrogenating copolymers of carbon monoxide and olefins in the presence of catalysts. At first, as those using heterogeneous catalysts, Japanese Patent Application Laid-open Nos. 149828/1989 and 232228/1990 disclose nickel catalysts, such as Raney nickel or metallic nickel as it is or carried on diatomaceous earth, silica, alumina or the like; Adkins catalysts such as CuO/Cr₂O₃ and CuO/Cr₂O₃/BaO; cobalt catalysts such as Raney cobalt and CuO/SiO₂; ruthenium catalysts such as Ru/carbon, Ru/Al₂O₃ and Ru/SiO₂; palladium catalysts such as Pd/carbon and Pd/SiO₂; and similar catalysts. Japanese Patent Application Laid-open No. 339367/1993 discloses catalysts carrying a metal such as nickel, ruthenium or platinum, ruthenium oxide catalyst, Raney nickel, Adkins catalysts and like ones and prefers ruthenium carried on α-alumina and ruthenium oxide. Japanese Patent Application No. 49203/1994 discloses a ruthenium catalyst carried on alumina having an average micropore radius of at least 100 Ångstroms . Japanese Patent Application Laid-open No. 204929/1989 disclose a reduced nickel catalyst obtained by reacting a metal hydride with a nickel compound.

Next, as processes comprising the use of homogeneous catalysts, Japanese Patent Application Laid-open Nos. 149828/1989 and 232228/1990 disclose ruthenium complexes, such as dichlorotris(triphenylphosphine) ruthenium and dihydridotetrakis(triphenylphosphine) ruthenium; rhodium complexes, such as chlorotris(triphenylphosphine) rhodium; and like ones. Japanese Patent Application Laid-open No. 339367/1993 discloses chlorotris(triphenylphosphine) rhodium, dichlorotris(triphenylphosphine) ruthenium, ruthenium dodecacarbonyl and like catalysts.

With reactions which use a catalyst on a commercial basis, it is of top priority to minimize the amount of the catalyst. It is then also necessary, in order to obtain polyalcohols having good gas barrier properties, to increase the content of hydroxyl groups in the obtained polyalcohols. The above prior art processes for producing polyalcohols had the disadvantages that they were impractical due to the large amounts of catalysts used, and that the selectivity of hydrogenation was poor i.e., the hydroxyl group content of the product was reduced due to formation of tetrahydrofuran rings from hemiacetals formed by reaction between hydroxyl groups, formed by reduction of some of the carbonyl groups of the polyketone, and carbonyl groups in the polyketone.

At first, the problem encountered on use of heterogeneous catalysts is described. The Example of Japanese Patent Application Laid-open No. 149828/1989 uses a nickel-rhenium catalyst in an amount of 2 g based on 5 g of a polyketone copolymerized from ethylene and carbon monoxide, while that of Japanese Patent Application Laid-open No. 232228/1990 uses, for a copolymer of ethylene, propylene and carbon monoxide, a copper/chromium/manganese/barium catalyst in an amount of the same weight as that of the polyketone. The Examples of Japanese Patent Application Laid-open Nos. 339367/1993 and 49203/1994 use a ruthenium/α-alumina catalyst in an amount of 8 g based on 5 g of a polyketone copolymerized from ethylene and carbon monoxide. It is clear that such large amounts of catalysts are not desirable economically.

Japanese Patent Application Laid-open No. 204929/1989 shows an Example in which a copolymer of ethylene, propylene and carbon monoxide was hydrogenated with use of a reduced nickel catalyst. In this Example, the amount of the nickel compound was about 0.9 g based on 10 g of the copolymer polyketone. Although this amount can be said to be fairly small, the obtained polyalcohol contained 13% of residual carbonyl groups and 17% of tetrahydrofuran rings. It is thus impossible with this process to obtain a polyalcohol having a high hydroxyl group content and good gas barrier properties.

Japanese Patent Application Laid-open No. 304122/1989 describes a process which comprises hydrogenating a polyketone copolymerized from ethylene and carbon monoxide with a catalyst comprising a ruthenium-carbonyl complex and an iodide, to produce a polymer comprising ethylene units and tetrahydrofuran ring units. This means that the use of this ruthenium catalyst leads principally to formation of tetrahydrofuran rings and no polyalcohol at all.

Use of homogeneous catalysts is, as given above, described in Japanese Patent Application Laid-open Nos. 149828/1989, 232228/1990 and 339367/1993. None of these documents, however, give Examples using such catalysts. The present inventors therefore attempted to conduct hydrogenation with use of dichlorotris(triphenylphosphine) ruthenium, which is described in the above literature. However, as shown in Comparative Example 1, there could not be obtained a polyalcohol with good results.

Accordingly, an object of the present invention is to provide a process for producing polyalcohols by hydrogenating polyketones, which are copolymers of carbon monoxide and olefins, in the presence of a catalyst, said process using an economically desirable small amount of the catalyst and obtaining polyalcohols having a high hydroxyl group content.

As a result of an intensive study on processes for producing polyalcohols by hydrogenation of polyketones, which are copolymers of carbon monoxide and olefins, the present inventors have found that the following process gives good results and thus completed the invention. The process for producing polyalcohols comprises hydrogenating a polyketone, which is a copolymer of carbon monoxide and an olefin, in the presence of a catalyst prepared from a ruthenium compound and a trialkylphosphine represented by the general formula (I)

R¹R²R³P (I)

wherein R¹, R² and R³ each represents an alkyl group having 1 to 12 carbon atoms which may be substituted;
and a solvent.

Polyketones, which are copolymers of carbon monoxide and an olefin, are used in the present invention as a starting material for producing polyalcohols. Any olefin copolymerizable with carbon monoxide can be used for this purpose with no specific limitation, either singly or in combination of two or more. Examples of usable polyketones are as follows. Polyketones obtained by radical copolymerization of carbon monoxide and an olefin (U.S.P. No. 2,495,286 and Japanese Patent Application Laid-open Nos. 128690/1978 and 128691/1978); ones obtained by γ-irradiation copolymerization (European Polymer Journal, Vol. 9, 669 (1973)); and ones obtained by alternating copolymerization of carbon monoxide and an olefin with a catalyst comprising a transition metal compound (Japanese Patent Application Laid-open Nos. 197427/1984, 91226/1986, 232434/1987, 53332/1987, 3025/1988, 105031/1988, 132937/1988, 149829/1989 and 67319/1990). Examples of preferred olefins, which are copolymerizable in the above processes; are ethylene, propylene, 1-butene, 1-octene, isobutene, butadiene, 1,7-octadiene, vinyl acetate, styrene, methyl acrylate, methyl methacrylate and N-vinylpyrrolidone. The present invention is not limited with respect to the process for producing the starting material polyketone and its carbonyl group content. It is however desirable, in order to obtain polyalcohols having good gas barrier properties, to use copolymers of ethylene and carbon monoxide having 40 to 50 equivalent % of carbonyl group content.

The present invention uses a catalyst prepared from a ruthenium compound and a trialkylphosphine represented by the general formula (I)

R¹R²R³P (I)

wherein R¹, R² and R³ each represents an alkyl group having 1 to 12 carbon atoms which may be substituted.

Here, any ruthenium compound can be used with no specific limitation provided it provides a catalyst which dissolves in the reaction system. Usable ones therefore include the oxide, hydroxide, salts of inorganic acids, salts of organic acids, halides and complexes, of ruthenium. Concrete examples are ruthenium dioxide, ruthenium dihydroxide, ruthenium acetate, ruthenium chloride, dichlorobis(cycloocatadiene) ruthenium, ruthenium acetylacetonate, pentacarbonyl ruthenium, dodecacarbonyl triruthenium and tetrahydridododecacarbonyl ruthenium. These ruthenium compounds are used in an amount of 0.1 to 100 mg-atom in terms of ruthenium based on one mole of carbonyl groups present in the starting material polyketone, preferably 0.5 to 10 mg-atom on the same basis. Too small an amount of the ruthenium compound used decreases the rate of reaction, while too large an amount is economically disadvantageous from the viewpoint of catalyst cost.

Examples of the phosphine represented by the general formula (I)

R¹R²R³P (I)

wherein R¹, R² and R³ each represents an alkyl group having 1 to 12 carbon atoms which may be substituted, include trimethylphosphine, triethylphosphine, tri-n-butylphosphine, tri-n-octylphosphine, tri-n-dodecylphosphine, dimethyl(n-butyl)phosphine, tri-i-propylphosphine and tricyclohexylphosphine. Among these, those with n-alkyl groups having 2 to 8 carbon atoms, e.g. triethylphosphine, tri-n-butylphosphine and tri-n-octylphosphine, are preferred. These alkyl groups may be substituted with hydroxyl, alkoxyl, alkoxyalkyl, and cyano group. The amount of these phosphines used is, although varying according to the type of the phosphine used, generally 1 to 10 mmoles based on 1 mg-atom of ruthenium, more preferably 3 to 6 mmoles on the same basis. Too low an amount of the phosphine leads to low selectivity, while too large an amount decreases the catalyst activity.

The trialkylphosphines may be used singly or in combination of two or more.

The catalyst can also be prepared in the presence of an acid or salts thereof. Inorganic and organic acids and salts thereof can be used for this purpose. Examples of usable acids include acids, e.g. hydrochloric acid, hydrobromic acid, sulfuric acid, nitric acid, hydroborofluoric acid, fluorosulfonic acid, phosphoric acid, trifluoroacetic acid, methanesulfonic acid, phenylphosphonic acid, p-toluenesulfonic acid, acetic acid, propionic acid and benzoic acid. Examples of usable acid salts are metal salts, e.g. sodium borofluoride, sodium phosphate, lithium trifluoroacetate, magnesium chloride and aluminum chloride and ammonium salts, e.g. ammonium hexafluorophosphate, tetramethyl p-toluenesulfonate and pyridinium phenylphosphonate. These salts may be either directly added to the reaction zone on preparation of the catalyst or formed in the reaction zone by at first adding an acid or base to the reaction zone and then adding the counterpart. The activity of the catalyst varies depending on the acid strength of the acid or its salt used. Use of those acids or salts thereof having a pKa of not more than 5 is particularly preferred. Here, the term "pKa" means the logarithmic value of the acid dissociation constant determined in an aqueous solution at 25°C. Examples of the pKa value of representative compounds are shown, for example, in 4-th edition of Kagaku Benran, Fundamentals II", 316-321 (edited by Chemical Society of Japan and published from Maruzen).

The amount of these acids or salts thereof used is, although varying according to the type of the acid or salts thereof and trialkylphosphine used, generally 0.1 to 20 mmoles based on 1 mg-atom of ruthenium, more preferably 0.5 to 10 mmoles on the same basis. Too low an amount of the acids or salts thereof leads to insufficient development of reaction-promoting effect, while too large an amount leads to increased amounts of tetrahydrofuran formed and hence to low selectivity.

There are no limitations regarding the solvent used in the invention, provided that it is a solvent that can dissolve the catalyst that forms in the reaction mixture and is inactive to hydrogenation reaction. Examples of usable solvents are alcohols, e.g. methyl alcohol, ethyl alcohol, n-propyl alcohol, isopropyl alcohol, n-butyl alcohol, n-octyl alcohol, cyclohexanol, ethylene glycol, diethylene glycol, ethylene glycol monomethyl ether and diethylene glycol monomethyl ether; ethers, e.g. tetrahydrofuran, dioxane, dibutyl ether, ethylene glycol dimethyl ether and diethylene glycol dimethyl ether; and sulfur-containing compounds, e.g. dimethyl sulfoxide and sulfolane. These solvents may be used singly or in combination of two or more. Particularly preferred solvents are sulfolane and mixed solvents containing sulfolane. Examples of components to be mixed with sulfolane are water; alcohols, e.g. methyl alcohol, ethyl alcohol, n-propyl alcohol, isopropyl alcohol, n-butyl alcohol, n-octyl alcohol, cyclohexanol, ethylene glycol, diethylene glycol, ethylene glycol monomethyl ether and diethylene glycol monomethyl ether; and ethers, e.g. tetrahydrofuran, dioxane, dibutyl ether, ethylene glycol dimethyl ether and diethylene glycol dimethyl ether. Among these, water is desirable for use as a component to be mixed with sulfolane. In this case, any mixing ratio may be employed, but the ratio of sulfolane/water is preferably 9/1 to 1/9, more preferably 7/3 to 3/7. Similarly, one or two or more of the above other solvents can also be mixed with sulfolane. The amount of the solvent used is generally 0.1 to 80% by weight in terms of the concentration of the starting material polyketone, more preferably 1 to 50% by weight and most preferably 5 to 20% by weight on the same basis. Too high a concentration increases the solution viscosity, thereby rendering it difficult to conduct sufficient stirring; while too low a concentration is economically disadvantageous in view of reaction efficiency and solvent recovery.

The reaction is effected generally at a temperature of 30 to 300°C, preferably at 100 to 250°C, more preferably at 150 to 180°C. Too low and too high temperatures are both disadvantageous, with respect to the reaction rate for the former and the selectivity for the latter. The reaction is carried out under an atmosphere of hydrogen, where an inert gas such as nitrogen or argon may be present in combination. The reaction pressure is in the range from 1 to 500 atm, preferably from 20 to 300 atm and particularly from 50 to 200 atm. Both too low and too high reaction pressures are disadvantageous, from the viewpoint of the rate of reaction for the former and equipment and running cost for the latter. Hydrogen may be added to make up for its consumption during the reaction, and the addition of hydrogen can also be maintained continuously. The reaction may be carried out by any one of batch-wise, semi-continuous and continuous method.

The polyalcohol thus obtained can be separated from the reaction mixture by any conventional separation process. For example, the catalyst used is, as necessary, removed from the reaction mixture by adsorption, extraction or like methods and then the polyalcohol is subjected to precipitation, extraction, distillation or like processes to remove solvent. The polyalcohol may, as necessary, be further purified by conventional processes, such as reprecipitation and extraction-washing.

Other features of the invention will become apparent in the course of the following descriptions of exemplary embodiments which are given for illustration of the invention and are not intended to be limiting thereof.

### Example 1

A 300-ml autoclave equipped with a stirrer was charged with 16.5 g of an alternating copolymer of ethylene and carbon monoxide, 0.266 g of ruthenium acetylacetonate, 0.676 g of tri-n-butylphosphine, 0.106 g of phenylphosphonic acid and 150 ml of a mixture of sulfolane and water (ratio by volume: 60/40) and the reactor was sealed. After the atmosphere inside the reactor had been replaced by hydrogen at room temperature, hydrogen was further introduced under pressure until the inside pressure reached 100 atm. The autoclave was heated whilst stirring to an inside temperature of 160°C and, after addition of hydrogen to a total pressure of 150 atm, subjected to continuing heating whilst stirring for 10 hours. After completion of the reaction, the contents were withdrawn from the reactor under a pressure of hydrogen into acetone. The precipitated polymer was separated by filtration, then washed with acetone three times and dried under reduced pressure, to yield a white solid. The yield was 92% based on the starting material polyketone. Structural analysis by NMR spectroscopy of the obtained product revealed that the conversion of carbonyl groups was 100% and that the ratio between CH(OH) structure and tetrahydrofuran ring structure was 96/4.

### Examples 2 through 6

The reaction was carried out in the same manner as Example 1 except that acids as shown in Table 1 were used instead of phenylphosphonic acid and that it was continued for the time also shown in Table 1. The results are shown in Table 1. In the tables that follow, the yield of the obtained solid, conversion of carbonyl groups calculated from the results of NMR spectroscopy and the ratio between the CH(OH) structure and tetrahydrofuran ring structure obtained in the same manner are shown simply as "yield", "conversion" and "selectivity", respectively.

**Table 1**

| Example | Acid | Amount used | Time (hr) | Yield (%) | Conversion (%) | Selectivity |
|---|---|---|---|---|---|---|
| 2 | Phosphoric acid | 0.066g | 10 | 90 | 100 | 95/5 |
| 3 | Hydrochloric acid(1N) | 0.67ml | 10 | 88 | 100 | 96/4 |
| 4 | Acetic acid | 0.200g | 10 | 91 | 100 | 95/5 |
| 5 | Sodium phenylphosphonate | 0.120g | 20 | 90 | 100 | 92/8 |
| 6 | Pyridinium phenylphosphonate | 0.159g | 20 | 88 | 100 | 95/5 |

### Example 7

The reaction was carried out in the same manner as Example 1 except that phenylphosphonic acid was not used and that the reaction temperature was changed to 180°C. The yield of the obtained white solid was 88% based on the starting material polyketone. NMR spectroscopy revealed that the conversion of carbonyl groups and the ratio between CH(OH) structure and tetrahydrofuran structure were 100% and 92/8, respectively.

### Examples 8 through 12

The reaction was carried out in the same manner as Example 1 except that phosphines as shown in Table 2 were used and that the reaction time was set as shown in Table 2. The results are shown in Table 2.

**Table 2**

| Example | Phosphine | Amount used (g) | Time (hr) | Yield (%) | Conversion (%) | Selectivity |
|---|---|---|---|---|---|---|
| 8 | Tri-n-octylphosphine | 1.24 | 20 | 92 | 100 | 95/5 |
| 9 | Tri-i-propylphosphine | 0.535 | 20 | 83 | 100 | 85/15 |
| 10 | n-Octyl-di-n- butylphosphine | 0.865 | 10 | 90 | 100 | 95/5 |
| 11 | Triethylphosphine | 0.201 | 10 | 85 | 100 | 91/9 |
| 12 | Trimethylphosphine | 0.154 | 10 | 83 | 100 | 89/11 |

### Example 13

The reaction was carried out in the same manner as Example 1 except that 16.5 g of a radical copolymer of ethylene and carbon monoxide (copolymerization ratio of carbon monoxide: 48 equivalent %) was used instead of the alternating copolymer of ethylene and carbon monoxide. The yield of the obtained white solid was 85% based on the starting material polyketone. NMR spectroscopy revealed that the conversion of carbonyl groups and the ratio between CH(OH) structure and tetrahydrofuran structure were 100% and 96/4, respectively.

### Example 14

The reaction was carried out in the same manner as Example 1 except that 16.5 g of an alternating copolymer of ethylene, propylene and carbon monoxide (composition ratio: 47/3/50) was used instead of the alternating copolymer of ethylene and carbon monoxides. The yield of the obtained white solid was 88% based on the starting material polyketone. NMR spectroscopy revealed that the conversion of carbonyl groups and the ratio between CH(OH) structure and tetrahydrofuran structure were 100% and 95/5, respectively.

### Example 15

The reaction was carried out in the same manner as Example 1 except that 16.5 g of an alternating copolymer of ethylene, propylene and carbon monoxide (composition ratio: 45/5/50) was used instead of the alternating copolymer of ethylene and carbon monoxide, that 0.11 g of benzenesulfonic acid was used instead of phenylphosphonic acid and that the reaction time was prolonged to 20 hours. The yield of the obtained white solid was 87% based on the starting material polyketone. NMR spectroscopy revealed that the conversion of carbonyl groups and the ratio between CH(OH) structure and tetrahydrofuran structure were 100% and 94/6, respectively.

### Example 16

The reaction was carried out in the same manner as Example 1 except that dichlorobis(cyclooctadiene) ruthenium was used instead of ruthenium acetylacetonate. The yield of the obtained white solid was 93% based on the starting material polyketone. NMR spectroscopy revealed that the conversion of carbonyl groups and the ratio between CH(OH) structure and tetrahydrofuran structure were 100% and 93/7, respectively.

### Comparative Example 1

The reaction was carried out in the same manner as Example 1 except that the catalyst was changed from the mixture of ruthenium acetylacetonate, tri-n-butylphosphine and phenylphosphonic acid to 0.64 g of ruthenium dichlorotris(triphenylphosphine). The yield of the obtained white solid was 18% based on the starting material polyketone. NMR spectroscopy revealed that the conversion of carbonyl groups and the ratio between CH(OH) structure and tetrahydrofuran structure were 92% and 18/82, respectively.

### Comparative Example 2

The reaction was carried out in the same manner as Example 1 except that 0.876 g of triphenylphosphine was used instead of tri-n-butylphosphine and that the reaction time was set at 6 hours. The yield of the obtained white solid was 52% based on the starting material polyketone. NMR spectroscopy revealed that the conversion of carbonyl groups and the ratio between CH(OH) structure and tetrahydrofuran structure were 92% and 22/78, respectively.

Obviously, numerous modifications and variations of the present invention are possible in light of the above teachings. It is therefore to be understood that within the scope of the appended claims, the invention may be practiced otherwise than as specifically described herein.

## Claims

1. A process for producing polyalcohols which comprises hydrogenating a polyketone, which is a copolymer of carbon monoxide and an olefin, in the presence of a catalyst which dissolves in the reaction system prepared from a ruthenium compound and a trialkylphosphine represented by the general formula (I)
R¹R²R³P
wherein R¹, R² and R³ each represents an alkyl group having 1 to 12 carbon atoms which may be substituted;
and a solvent which is inactive to hydrogenation reaction.

2. The process for producing polyalcohols according to Claim 1, wherein said R¹, R² and R³ in the formula (I) are each an n-alkyl group having 2 to 8 carbon atoms.

3. The process for producing polyalcohols according to either Claim 1 or Claim 2, further comprising preparing the catalyst in the presence of an acid or salts thereof.

4. The process for producing polyalcohols according to Claim 3, wherein said acid or salts thereof has a pKa of not more than 5.

5. The process for producing polyalcohols according to anyone of Claims 1 through 4, wherein said polyketone is a copolymer of ethylene and carbon monoxide having a carbonyl group content of 40 to 50 equivalent%.

6. The process for producing polyalcohols according to anyone of Claims 1 through 5, wherein said solvent is sulfolane or a mixed solvent containing sulfolane.

## Patentansprüche

1. Verfahren zum Herstellen von Polyalkoholen, welches das Hydrieren eines Polyketons, das ein Copolymer von Kohlenmonoxid und einem Olefin ist, in Gegenwart eines Katalysators, welcher sich in dem Reaktionssystem löst und welcher aus einer Rutheniumverbindung und einem Trialkylphosphin hergestellt ist, dargestellt durch die allgemeine Formel (I)
R¹R²R³P
worin die Reste R¹, R² und R³ jeweils einen Alkylrest mit 1 bis 12 Kohlenstoffatomen darstellen, welche substituiert sein können, und eines Lösungsmittels, welches gegenüber der Hydrierungsreaktion inaktiv ist, umfaßt.

2. Verfahren zum Herstellen von Polyalkoholen nach Anspruch 1, wobei die Reste R¹, R² und R³ in der Formel (I) jeweils ein n-Alkylrest mit 2 bis 8 Kohlenstoffatomen sind.

3. Verfahren zum Herstellen von Polyalkoholen nach Anspruch 1 oder 2, weiter umfassend das Herstellen des Katalysators in Gegenwart einer Säure oder Salzen davon.

4. Verfahren zum Herstellen von Polyalkoholen nach Anspruch 3, wobei die Säure oder die Salze davon einen pKa von nicht mehr als 5 aufweist bzw. aufweisen.

5. Verfahren zum Herstellen von Polyalkoholen nach einem der Ansprüche 1 bis 4, wobei das Polyketon ein Copolymer von Ethylen und Kohlenmonoxid mit einem Carbonylgruppengehalt von 40 bis 50 Äquivalent% ist.

6. Verfahren zum Herstellen von Polyalkoholen nach einem der Ansprüche 1 bis 5, wobei das Lösungsmittel Sulfolan oder ein Lösungsmittelgemisch ist, das Sulfolan enthält.

## Revendications

1. Procédé de préparation de polyols, comprenant l'hydrogénation d'une polycétone, qui est un copolymère de monoxyde de carbone et d'une oléfine, en présence d'un catalyseur qui se dissout dans le système de réaction préparé à partir d'un composé du ruthénium et d'une trialkylphosphine représentée par la formule générale (I)
R¹R²R³P
dans laquelle R¹, R² et R³ représentent chacun un groupe alkyle ayant de 1 à 12 atomes de carbone, qui peut être substitué ;
et d'un solvant qui est neutre vis-à-vis de la réaction d'hydrogénation.

2. Procédé de préparation de polyols selon la revendication 1, dans lequel lesdits R¹, R² et R³ dans la formule (I) sont chacun un groupe n-alkyle ayant de 2 à 8 atomes de carbone.

3. Procédé de préparation de polyols selon la revendication 1 ou la revendication 2, comprenant, en outre, la préparation du catalyseur en présence d'un acide ou de sels de celui-ci.

4. Procédé de préparation de polyols selon la revendication 3, dans lequel ledit acide ou lesdits sels de celui-ci ont une valeur de pKa ne dépassant pas 5.

5. Procédé de préparation de polyols selon l'une quelconque des revendications 1 à 4, dans lequel ladite polycétone est un copolymère d'éthylène et de monoxyde de carbone ayant une teneur en groupes carbonyle de 40 à 50 % en équivalents.

6. Procédé de préparation de polyols selon l'une quelconque des revendications 1 à 5, dans lequel ledit solvant est du sulfolane ou un solvant mixte contenant du sulfolane.
